# FASCICULE DE BREVET EUROPEEN

(11) **EP 2 687 699 B1**
(45) Date de publication et mention de la délivrance du brevet: **16.11.2016**
(21) Numéro de dépôt: 13171499.0
(22) Date de dépôt: 11.06.2013
(51) Int. Cl.: F02B 21/00, B60K 6/12, F02B 39/00

(54) **Moteur a combustion de vehicule automobile a alimentation améliorée de réservoir d'air comprime**
Verbrennungsmotor eines Kraftfahrzeugs mit verbesserter Versorgung des Drucklufttanks
Combustion engine of a motor vehicle with improved supply of compressed air tank

(30) Priorité: 20.07.2012 FR 1257040
(43) Date de publication de la demande: 22.01.2014
(73) Titulaire: PEUGEOT CITROËN AUTOMOBILES SA, 78140 Vélizy-Villacoublay (FR)
(72) Inventeur: Denys, Fabien, 59300 Valenciennes (FR); Revol, Emmanuel, 75012 Paris (FR)

(56) Documents cités:
- DE-A1-102008 057 544
- DE-A1-102009 026 469
- FR-A1- 2 784 419
- FR-A1- 2 922 162
- US-A1- 2011 253 111

## Description

L'invention concerne les moteurs à combustion de véhicules automobiles et plus particulièrement les moteurs à combustion comportant un réservoir d'air comprimé alimentant un cylindre à piston en un tel air comprimé. L'invention concerne notamment de tels moteurs lorsque le réservoir d'air comprimé alimente le cylindre à piston aux fins d'entrainer le piston par la pression exercée par l'air comprimé, également appelés moteurs hybrides pneumatiques. L'invention concerne également de tels moteurs lorsque le réservoir d'air comprimé alimente le cylindre à piston aux fins d'une combustion avec un air arrivant sous pression dans ce cylindre.

Dans de tels moteurs, le réservoir d'air comprimé est typiquement alimenté en air par un cylindre à piston, qui peut être le cylindre à piston dédié à la combustion.

Ce mode d'alimentation du réservoir, s'il présente une certaine efficacité, présente néanmoins l'inconvénient de générer de puissantes pulsations de pression en entrée du réservoir d'air comprimé.

Ces pulsations d'air se retrouvent en sortie du réservoir d'air comprimé dans une conduite de sortie par lequel le réservoir alimente le cylindre en air comprimé. Ainsi, on observe des pulsations de pression assez importantes dans le réservoir d'air qui perturbent au final le bon remplissage des cylindres moteur.

De plus les pulsations d'air en sortie empêchent de maitriser la quantité d'air alimentant le cylindre, qui pourtant conditionne la puissance délivrée par le moteur, que cet air soit brulé ou soit utilisé en tant que source d'énergie pneumatique.

Il est en outre souhaitable d'améliorer encore le rendement de tels moteurs en termes d'efficacité de fourniture d'air comprimé au réservoir.

Il est par ailleurs connu du document DE 10 2008 057 544 un véhicule automobile comprenant un corps porteur de charge et un moteur à combustion interne avec un dispositif de chargement qui est couplé avec le moteur à combustion interne. Un accumulateur de pression est prévu pour recevoir l'alimentation en air comprimé. L'accumulateur de pression fait partie intégrante du corps porteur de charge.

L'invention vise à permettre d'atténuer les pulsations de pression dans le réservoir lors des phases de récupération d'air comprimé. Elle vise également à améliorer la fourniture d'air comprimé au réservoir.

Ces buts sont atteints selon l'invention grâce à un moteur à combustion de véhicule automobile, selon la revendication 1.

De préférence, il y a une connexion fluidique directe entre la première conduite et la turbine, et entre la turbine et l'entrée du réservoir d'air comprimé. On comprend par connexion fluidique directe le fait qu'il n'y a pas d'organes traversés par la conduite en question (à part éventuellement une ou des vannes). De même, il y a de préférence une connexion fluidique directe entre la deuxième entrée du réservoir d'air comprimé et le compresseur de gaz disposé sur la deuxième conduite.

Avantageusement, la seconde conduite est reliée à l'air ambiant.

Avantageusement, la seconde entrée du réservoir est connectée à une conduite d'admission du moteur.

Avantageusement, la seconde entrée est munie d'un dispositif anti-retour (36) empêchant une fuite d'air comprimé hors du réservoir.

Avantageusement, le moteur comporte une conduite parallèle au récupérateur d'énergie, mettant en liaison le réservoir avec le cylindre, et cette conduite est munie d'un dispositif anti-retour autorisant une circulation de gaz vers le cylindre mais interdisant une circulation de gaz vers le réservoir.

Avantageusement, le moteur est configuré pour un entrainement du moteur par une énergie de décompression de l'air contenu dans le réservoir d'air comprimé.

Avantageusement, le cylindre est un cylindre de combustion et le moteur est configuré pour que le cylindre de combustion alimente le réservoir en air comprimé lorsque le véhicule est en phase de frein moteur.

De préférence, le système selon l'invention avec récupérateur d'énergie du type turbocompresseur et le réservoir d'air comprimé sont indépendants de l'admission et de l'échappement du moteur lui-même. Il est alimenté en gaz à l'aide d'une (de) soupape(s) dédiée(s) d'un ou plusieurs des cylindres du moteur, qui sont différentes des soupapes d'admission et d'échappement des cylindres.

L'invention concerne également un véhicule automobile comprenant un tel moteur.

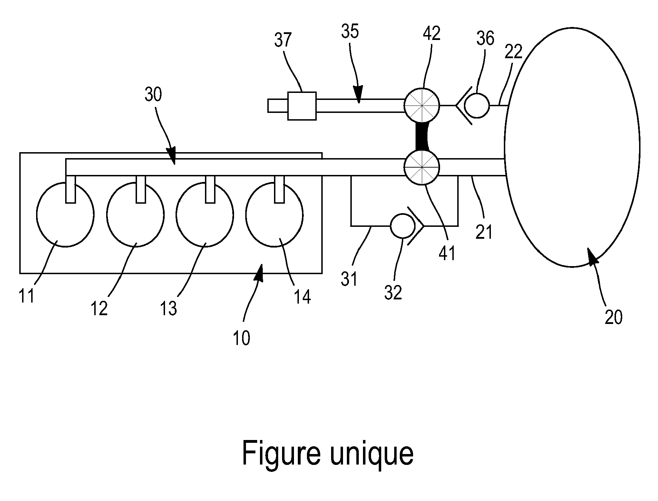

D'autres caractéristiques, buts et avantages de l'invention apparaitront à la lecture de la description qui va suivre, faite en référence à la figure unique annexée, qui représente un dispositif selon un mode de réalisation de l'invention.

Le moteur de la figure annexée comporte un bloc moteur 10 et un réservoir d'air comprimé 20. Le bloc moteur 10 est muni d'un jeu de cylindres référencés 11, 12, 13, 14. Chaque cylindre 11, 12, 13 ,14 comporte au moins une soupape d'admission, une soupape d'échappement, et une soupape d'alimentation du réservoir d'air comprimé 20.

Un conduit d'air comprimé 30 relie chacun des cylindres 11, 12, 13, 14 au réservoir d'air comprimé 20.Le réservoir 20 comporte à cet effet une entrée d'air comprimée 21 alimentée par le conduit 30. Le réservoir 20 comporte en outre une deuxième entrée d'air comprimé 22 laquelle est reliée à l'air libre par une conduite 35 équipée d'un équipement de compression que l'on décrira maintenant.

Aux fins de réduire les pulsations d'air comprimé dans la première entrée 21 du réservoir 20 et aux fins d'améliorer le rendement d'alimentation du réservoir, on dispose ici un turbocompresseur 40 entre le bloc moteur 10 et le réservoir 20. Ce turbocompresseur 40 comporte, de manière connue en soi, une turbine 41 et un compresseur 42. La turbine 41 est placée sur la conduite 30 d'alimentation en air comprimé du réservoir de sorte qu'elle prélève une énergie pneumatique de cet air comprimé pour entrainer la turbine 41 en rotation. Une telle turbine 41 peut notamment être centrifuge ou volumétrique.

Le compresseur 42 est quant à lui placé sur la deuxième conduite 35 alimentant la deuxième entrée d'air 22 de sorte qu'il compresse, grâce à l'énergie prélevée par la turbine 41, l'air dans la conduite 35 et constitue ainsi une deuxième source d'air comprimé en entrée du réservoir 20. Le compresseur 42 peut lui aussi être centrifuge ou volumétrique à titre d'exemple.

Grâce au turbocompresseur 40 ainsi positionné, la turbine 41 atténue les pulsations de pression et transforme celles-ci en une énergie cinétique de rotation du compresseur 42. Le compresseur 42 ainsi entrainé comprime l'air sur la deuxième entrée 22 du réservoir, d'une manière régulière. Le réservoir 20 se trouve ainsi protégé des pulsations de pression d'air d'alimentation, et bénéficie d'une deuxième source d'alimentation en air comprimé, laquelle améliore le rendement global d'alimentation en air du réservoir. Ce rendement global est amélioré d'autant plus que les pulsations d'air comprimé, néfastes au fonctionnement global du moteur, voient leur énergie pneumatique prélevée et transformée en énergie régulée de compression d'air sur la deuxième entrée du réservoir. Les oscillations de pression dans le conduit d'alimentation sont ici rendues très faibles, ce qui permet d'avoir une valeur fiable de mesure de pression dans le réservoir. En effet, la pression mesurée étant sensiblement la pression moyenne, cette pression mesurée est ici assez proche de la pression réelle.

Le présent dispositif permet d'améliorer le remplissage des cylindres moteur en air comprimé, en s'affranchissant d'un éventuel module de contrôle moteur réalisant une estimation des variations de pression à l'intérieur du conduit d'alimentation des cylindres ou à l'intérieur du conduit d'alimentation en air du réservoir, et en s'affranchissant de l'utilisation d'artifices acoustiques visant à diminuer les pulsations de pression en entrée ou en sortie du réservoir. Ainsi, d'un point de vue acoustique, il n'est plus nécessaire d'ajouter des résonateurs acoustiques ou d'adopter des longueurs de conduits spécifiquement prévues pour gérer aux mieux les oscillations de pression.

La conduite 30 est en outre équipée ici d'une branche de dérivation 31, s'étendant en parallèle du compresseur 41 laquelle est munie d'un clapet anti-retour 32 disposé de telle sorte que ce clapet laisse l'air circuler du réservoir 20 vers les cylindres 11, 12, 13, 14, mais empêche une circulation d'air dans un sens allant du bloc moteur 10 vers le réservoir 20. Ce clapet anti-retour 32 est agencé pour au contraire laisser passer l'air comprimé vers le bloc moteur 10 avec un minimum de pertes de charge lors de phases d'entrainement du moteur par la force de compression de l'air contenu dans le réservoir 20. A cet effet le clapet anti-retour 32 est préférentiellement un clapet laissant passer l'air du réservoir vers les cylindres de manière pilotée, par exemple par actionnement électrique de ce clapet.

La seconde entrée 22 du réservoir est fermée de manière étanche lors de phases arrêtées où la turbine 41 n'est pas entrainée. Pour cela, un clapet anti-retour 36 est disposé sur la deuxième conduite d'alimentation 35 du réservoir dans un sens tel que ce clapet anti-retour 36 empêche une sortie d'air hors du réservoir. Un tel clapet anti-retour peut également être disposé sur la conduite 30 afin qu'aucune fuite du réservoir ne prenne place au travers du compresseur 41.

La deuxième conduite 35 d'alimentation en air du réservoir est ici reliée à l'air atmosphérique. En variante, elle est reliée à une conduite d'admission en air des cylindres. La conduite 35 est en outre équipée ici d'un filtre à air 37 disposé en amont du compresseur 42.

Bien que l'on ait décrit ici une récupération d'énergie pneumatique en entrée du réservoir et une transformation de cette énergie par un turbocompresseur, en variante cette récupération d'énergie peut être réalisée par une turbine génératrice d'électricité, cette électricité étant utilisée pour alimenter un compresseur lui-même électrique ou être stockée provisoirement avant d'alimenter un tel compresseur électrique. En variante, tout autre système mécanique de récupération et de transformation d'énergie peut également remplacer le turbocompresseur ici décrit.

## Revendications

1. Moteur à combustion de véhicule automobile, comprenant - un réservoir d'air comprimé (20), - un cylindre (11,12 ,13,14) muni d'un piston et d'une soupape d'admission, d'une soupape d'échappement et d'une soupape d'alimentation du réservoir d'air comprimé (20), et - une première conduite (30) laquelle conduit un gaz initialement contenu dans le cylindre (11,12,13,14) jusqu'à une entrée (21) du réservoir d'air comprimé (20), **caractérisé en ce qu'**un récupérateur d'énergie (41) est disposé sur la première conduite (30) lequel récupère une énergie pneumatique du gaz lors de son déplacement dans la première conduite (30), et le réservoir (20) comporte une deuxième entrée (22) munie d'une deuxième conduite (35), un compresseur de gaz (42) étant disposé sur cette deuxième conduite (35), lequel compresseur de gaz (42) est entraîné par l'énergie récupérée par le récupérateur d'énergie (41) disposé sur la première conduite (30), ledit moteur comportant un turbocompresseur (40) comprenant la turbine (41) disposée pour constituer le récupérateur d'énergie et comprenant le compresseur (42) disposé pour former le compresseur de la deuxième conduite (35).

2. Moteur selon la revendication précédente, **caractérisé en ce que** la seconde conduite (35) est reliée à l'air ambiant.

3. Moteur selon l'une quelconque des revendications précédentes, **caractérisé en ce que** la seconde entrée (22) du réservoir (20) est connectée à une conduite d'admission du moteur.

4. Moteur selon l'une quelconque des revendications précédentes, **caractérisé en ce que** la seconde entrée (22) est munie d'un dispositif anti-retour (36) empêchant une fuite d'air comprimé hors du réservoir (20).

5. Moteur selon l'une quelconque des revendications précédentes, **caractérisé en ce qu'**il comporte une conduite (31) parallèle au récupérateur d'énergie (41), mettant en liaison le réservoir (20) avec le cylindre (11,12,13,14), et cette conduite (31) est munie d'un dispositif anti-retour (32) autorisant une circulation de gaz vers le cylindre (11,12,13,14) mais interdisant une circulation de gaz vers le réservoir (20).

6. Moteur selon l'une quelconque des revendications précédentes, **caractérisé en ce que** le moteur est configuré pour un entrainement du moteur par une énergie de décompression de l'air contenu dans le réservoir d'air comprimé (20).

7. Moteur selon l'une quelconque des revendications précédentes, **caractérisé en ce que** le cylindre (11,12,13,14) est un cylindre de combustion et le moteur est configuré pour que le cylindre de combustion (11,12,13,14) alimente le réservoir (20) en air comprimé lorsque le véhicule est en phase de frein moteur.

8. Véhicule automobile comprenant un moteur selon l'une quelconque des revendications précédentes.

## Patentansprüche

1. Verbrennungsmotor eines Kraftfahrzeugs, der einen Drucklufttank (20), einen Zylinder (11, 12, 13, 14), der mit einem Kolben und einem Ansaugventil, einem Auslassventil und einem Versorgungsventil des Drucklufttanks (20) sowie mit einer ersten Leitung (30) versehen ist, die Gas, das ursprünglich in dem Zylinder (11, 12, 13, 14) enthalten war, bis zu einem Eingang (21) des Drucklufttanks (20) führt, **dadurch gekennzeichnet, dass** ein Energierückgewinner (41) auf der ersten Leitung (30) angeordnet ist, der eine pneumatische Energie des Gases bei seiner Bewegung in der ersten Leitung (30) zurückgewinnt, und wobei der Tank (20) einen zweiten Eingang (22), der mit einer zweiten Leitung (35) versehen ist, umfasst, wobei ein Gasverdichter (42) auf dieser zweiten Leitung (35) angeordnet ist, wobei der Gasverdichter (42) von der Energie angetrieben wird, die von dem Energierückgewinner (41), der auf der ersten Leitung (30) angeordnet ist, zurückgewonnen wird, wobei der Verbrennungsmotor einen Turboverdichter (40) umfasst, der die Turbine (41) umfasst, die angeordnet ist, um den Energierückgewinner zu bilden und den Verdichter (42), der angeordnet ist, um den Verdichter der zweiten Leitung (35) zu bilden.

2. Verbrennungsmotor nach dem vorhergehenden Anspruch, **dadurch gekennzeichnet, dass** die zweite Leitung (35) mit der Umgebungsluft verbunden ist.

3. Verbrennungsmotor nach einem der vorhergehenden Ansprüche, **dadurch gekennzeichnet, dass** der zweite Eingang (22) des Tanks (20) mit einer an Saugleitung des Verbrennungsmotors verbunden ist.

4. Verbrennungsmotor nach einem der vorhergehenden Ansprüche, **dadurch gekennzeichnet, dass** der zweite Eingang (22) mit einer Rückschlagvorrichtung (36) versehen ist, die ein Druckluftleck aus dem Tank (20) verhindert.

5. Verbrennungsmotor nach einem der vorhergehenden Ansprüche, **dadurch gekennzeichnet, dass** er eine Leitung (31) parallel zu dem Energierückgewinner (41) umfasst, die den Tank (20) mit dem Zylinder (11, 12, 13, 14) in Verbindung bringt, und dass diese Leitung (31) mit einer Rückschlagvorrichtung (32) versehen ist, die eine Gaszirkulation zu dem Zylinder (11, 12, 13, 14) gestattet, aber eine Gaszirkulation zu dem Tank (20) verbietet.

6. Verbrennungsmotor nach einem der vorhergehenden Ansprüche, **dadurch gekennzeichnet, dass** der Verbrennungsmotor für ein Antreiben des Motors durch eine Dekompressionsenergie der Luft, die in dem Drucklufttank (20) enthalten ist, ausgelegt ist.

7. Verbrennungsmotor nach einem der vorhergehenden Ansprüche, **dadurch gekennzeichnet, dass** der Zylinder (11, 12, 13, 14) ein Verbrennungszylinder ist, und dass der Verbrennungsmotor ausgelegt ist, damit der Verbrennungszylinder (11, 12, 13, 14) den Drucklufttank (20) versorgt, wenn sich das Fahrzeug in Motorbremsenphase befindet.

8. Kraftfahrzeug, das einen Verbrennungsmotor nach einem der vorhergehenden Ansprüche umfasst.

## Claims

1. A combustion engine of a motor vehicle, including - a compressed air tank (20), - a cylinder (11, 12, 13, 14) provided with a piston and with an intake valve, an exhaust valve and a supply valve of the compressed air tank (20), and - a first duct (30), which conducts a gas initially contained in the cylinder (11, 12, 13, 14) to an inlet (21) of the compressed air tank (20), **characterized in that** an energy recuperator (41) is disposed on the first duct (30), which recovers a pneumatic energy of the gas during its displacement in the first duct (30), and the tank (20) comprises a second inlet (22) provided with a second duct (35), a gas compressor (42) being disposed on this second duct (35), which gas compressor (42) is driven by the energy recovered by the energy recuperator (41) disposed on the first duct (30), said engine comprising a turbocharger (40) including the turbine (41) disposed to constitute the energy recuperator and including the compressor (42) disposed to form the compressor of the second duct (35).

2. The engine according to the preceding claim, **characterized in that** the second duct (35) is connected to the ambient air.

3. The engine according to any one of the preceding claims, **characterized in that** the second inlet (22) of the tank (20) is connected to an intake duct of the engine.

4. The engine according to any one of the preceding claims, **characterized in that** the second inlet (22) is provided with a non-return device (36) preventing an escape of compressed air outside the tank (20).

5. The engine according to any one of the preceding claims, **characterized in that** it comprises a duct (31) parallel to the energy recuperator (41), connecting the tank (20) with the cylinder (11, 12, 13, 14), and this duct (31) is provided with a non-return device (32) permitting a circulation of gas toward the cylinder (11, 12, 13, 14) but prohibiting a circulation of gas toward the tank (20).

6. The engine according to any one of the preceding claims, **characterized in that** the engine is configured for a driving of the engine by a decompression energy of the air contained in the compressed air tank (20).

7. The engine according to any one of the preceding claims, **characterized in that** the cylinder (11, 12, 13, 14) is a combustion cylinder and the engine is configured such that the combustion cylinder (11, 12, 13, 14) supplies the tank (20) with compressed air when the vehicle is in engine braking phase.

8. A motor vehicle including an engine according to any one of the preceding claims.
